# EUROPÄISCHE PATENTANMELDUNG

(11) **EP 1 879 062 A1**
(43) Veröffentlichungstag der Anmeldung: **16.01.2008**
(21) Anmeldenummer: 07109987.3
(22) Anmeldetag: 11.06.2007
(51) Int. Cl.: G02B 13/00, G02B 13/04

(54) **Rückfahrkamera für ein Fahrzeug**

(30) Priorität: 13.07.2006 DE 102006032553
(71) Anmelder: ROBERT BOSCH GMBH, 70442 Stuttgart (DE)
(72) Erfinder: Franz, Gerald, 71522 Backnang (DE)

(57) **Zusammenfassung**

Die Erfindung betrifft eine Rückfahrkamera für ein Fahrzeug, die aufweist:
eine erste Linse (4) mit einer vorderen Linsenfläche (4.1) und einer konkaven hinteren Linsenfläche (4.2),
eine im Strahlengang hinter der ersten Linse (4) angeordnete, bikonvexe zweite Linse (6), einen Bildsensor (8) zur winkelaufgelösten Detektion des einfallenden Lichtes,
ein vor dem Bildsensor (8) angeordnetes und mit diesem verbundenes drittes optisches Element (7), und
ein die Linsen (4, 6), den Bildsensor (8) und das dritte optische Element (7) aufnehmendes Gehäuse (10),

wobei mindestens die hintere Linsenfläche (4.2) der ersten Linse (4) asphärisch konkav ausgebildet ist.

Erfindungsgemäß wird bei einer geringen Teileanzahl und großem Öffnungswinkel eine kostengünstige Herstellung ermöglicht, wobei eine Reduktion des Farbquerfehlers auf das für die Anwendung einer Farbrückfahrkamera erforderliche Maß möglich ist. Hierbei können Farbmoirc-Effekte durch eine unscharfe Abbildung aufgrund einer geringen Modulationsübertragungsfunktion weitgehend unterdrückt werden.

## Beschreibung

Die Erfindung betrifft eine Rückfahrkamera, insbesondere eine Farbrückfahrkamera, für ein Fahrzeug.

### Stand der Technik

Rückfahrkameras bzw. Rear View Cameras (RVC) werden im Automotivebereich insbesondere zur Erleichterung des Einparkvorganges eingesetzt. Sie sind in der Regel mit Weitwinkelobjektiven zur Erfassung eines größeren Fahrbereichs ausgestattet.

Im Automotivebereich eingesetzte Kameras sind unterschiedlichen Umgebungsbedingungen ausgesetzt, insbesondere extremen Klimabedingungen von niedrigen bis sehr hohen Temperaturen, und erfordern eine hinreichende Stabilität gegenüber feuchter Wärme. Dennoch sollen die Kameras, insbesondere auch Rückfahrkameras, klein, kompakt und möglichst kostengünstig herstellbar sein. Weiterhin ist eine scharfe optische Abbildung auch bei dem erforderlichen großen Öffnungswinkel gewünscht, wobei ergänzend Farbfehler zu vermeiden sind. An Farbfehlern können insbesondere Farbmoire-Effekte auftreten, die z. B. durch Aliasing oder Farbquerfehler verursacht werden. Als Bildsensor dient im Allgemeinen eine CCD-Kamera, die entsprechend vor den Umwelteinflüssen, insbesondere Staub, zu schützen ist.

Hierbei sind insbesondere die genaue Ausrichtung der Elemente des Objektives sowie die hinreichende Klimabeständigkeit insbesondere der der Umgebung exponierten Teile nicht unproblematisch.

### Offenbarung der Erfindung:

Die erfindungsgemäße Rückfahrkamera weist einen Bildsensor und ein Objektiv auf, das aus zwei Linsen, einer Blende und gegebenenfalls einem vor dem Bildsensor angeordneten weiteren optischen Element gebildet wird. Dieses weitere optische Element kann z.B. eine dritte Linse, eine Glasplatte oder eine Faserplatte sein. Weiterhin kann zusätzlich eine den vorderen Abschluss der optischen Einrichtung darstellende Glasplatte vorgesehen sein. Vorteilhafterweise sind weitere optische Elemente bzw. den Strahlengang beeinflussende Elemente nicht vorgesehen.

Erfindungsgemäß kann somit eine geringe Teileanzahl verwirklicht werden, so dass die optische Ausrichtung der einzelnen Elemente entlang der optischen Achse relativ einfach durchführbar ist, z.B. durch geeignete Distanzringe bzw. Zwischenstücke, die an entsprechenden, z.B. konischen Anlagenfläche der optischen Elemente in selbstzentrierender Weise angebracht werden können. Der Bildsensor bzw. das den Bildsensor aufnehmende dritte optische Element kann hierbei an einer Rückseite des Gehäuses aufgenommen sein, wobei der vordere Abschluss durch die zusätzliche Schutzglasplatte oder auch die erste Linse selbst erfolgt.

Hierbei wird erfindungsgemäß eine Kombination unterschiedlicher Linsen realisiert, von denen die erste Linse eine asphärische, konkave hintere Fläche und asphärische oder planare vordere Fläche aufweist. Die zweite Linse ist vorteilhafterweise hinter der Blende vorgesehen und zumindest in einem mittleren Bereich um die optische Achse herum bikonvex ausgebildet. Sie kann sphärische oder asphärische Flächen aufweisen. Bei der asphärischen Ausführungsform kann ein äußerer, d.h. von der Achse weiter entfernter Bereich der hinteren Fläche auch konvex ausgebildet sein, wenn nachfolgend als drittes optisches Element eine dritte Linse vorgesehen ist, die auf ihrer vorderen Fläche in einem äußeren Bereich konvex ausgebildet ist.

Das dritte optische Element ist mit dem Bildsensor verbunden und kann zum einen direkt eine biplanare Glasplatte sein, auf deren Rückseite der Bildsensor mittels eines optischen nicht in Erscheinung tretenden Klebstoffs oder Immersionsmittels befestigt ist. Weiterhin ist auch die Verwendung einer Faserplatte möglich, deren sphärische Vorderseite die Bildebene darstellt und auf deren Rückseite der Bildsensor geklebt ist. Bei weiteren Ausführungsformen mit der dritten Linse als drittes optisches Element kann der Bildsensor mit axialem Abstand, z.B. mit einem dichtenden Distanzring, aufgenommten sein. Eine derartige dritte Linse dient der Korrektur von Bildfehlern und ist hierbei im Allgemeinen komplexer mit zwei Asphären ausgebildet; diese können gegebenenfalls sowohl konvexe als auch konkave Bereiche, z.B. eine Vorderfläche mit einem mittleren konvexen Bereich und gegebenenfalls sich anschließendem äußeren konkaven Bereich und weiterhin eine Rückseite mit einem planaren oder konkaven mittleren Bereich und einem sich anschließenden konvexen äußeren Bereich aufweisen.

Die Schutzglasplatte dient der Widerstandsfähigkeit nach außen, d.h. der Automotive-Tauglichkeit mit hinreichendem Abrasivschutz sowie Schutz vor feuchter Wärme und anderen Klimaeinflüssen. Anstelle der biplanaren Glasscheibe kann jedoch auch die erste Linse selbst als vordere Abdeckung des Objektivs dienen und hierzu aus Mineralglas hergestellt sein.

### Kurze Beschreibung der Zeichnungen

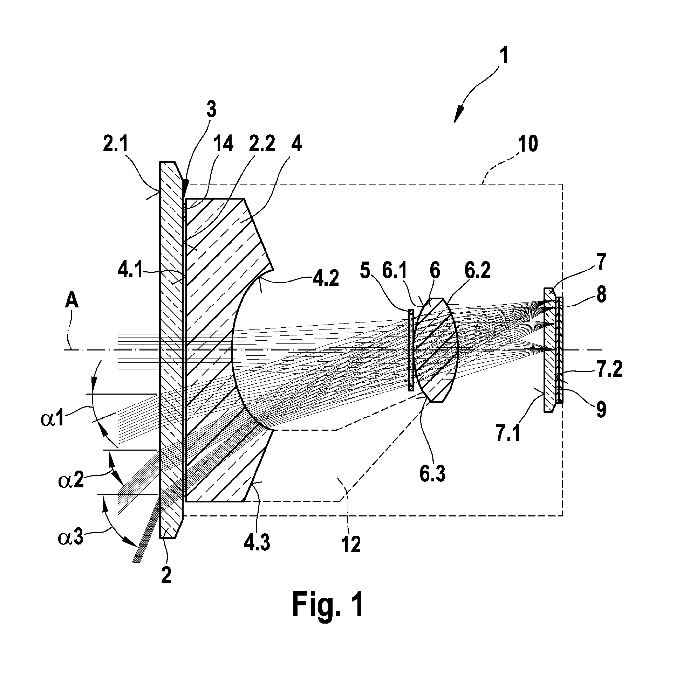

- Fig. 1 bis: 9 eine erste Ausführungsform mit Schutzglas und zwei Kunststofflinsen:
- Fig. 1: einen Axialschnitt durch die Farbrückfahrkamera;
- Fig. 2: eine Darstellung der lateralen Aberrationen der Farbrückfahrkamera bzw. ihres Objektivs;
- Fig. 3: ein Spot-Diagramm der Farbrückfahrkamera;
- Fig. 4: ein Diagramm des Farbquerfehlers der Farbrückfahrkamera aus Fig. 1;
- Fig. 5: die Modulationsübertragungsfunktion (MTF) für unterschiedliche Linienpaare;
- Fig. 6: die Modulationsübertragungsfunktion (MTF) für unterschiedliche Linienpaare bei weiteren Frequenzen;
- Fig. 7: die Verzeichnung in der Bildebene;
- Fig. 8: die relative Bestrahlungsstärke in Abhängigkeit des Feldwinkels;
- Fig. 9: die relative Transmission in Abhängigkeit des Feldwinkels;
- Fig. 10 bis 18: eine zweite Ausführungsform mit zwei Kunststofflinsen, einem Schutzfenster und einer Glasfaserplatte:

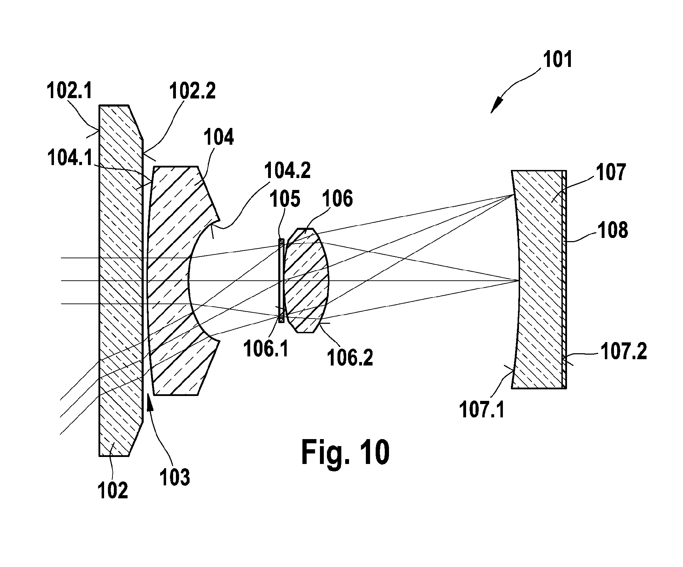

- Fig. 10: einen Axialschnitt entlang der optischen Achse

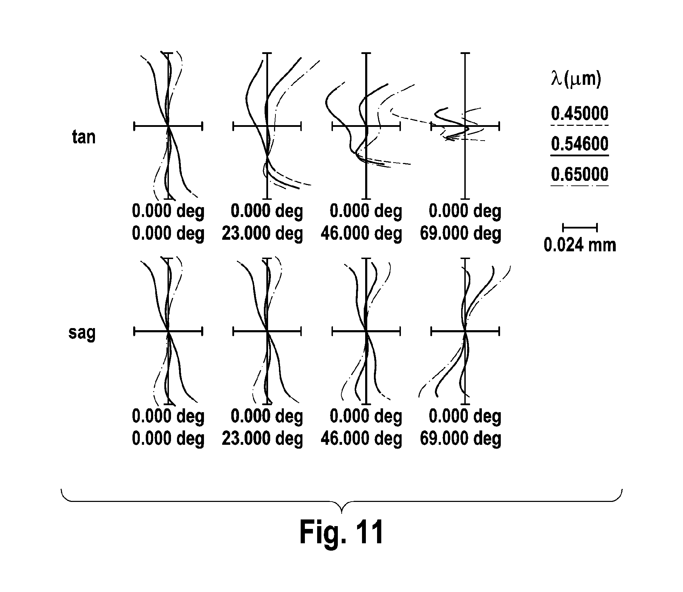

- Fig. 11: eine Darstellung der lateralen Aberrationen der Farbrückfahrkamera bzw. ihres Objektivs;

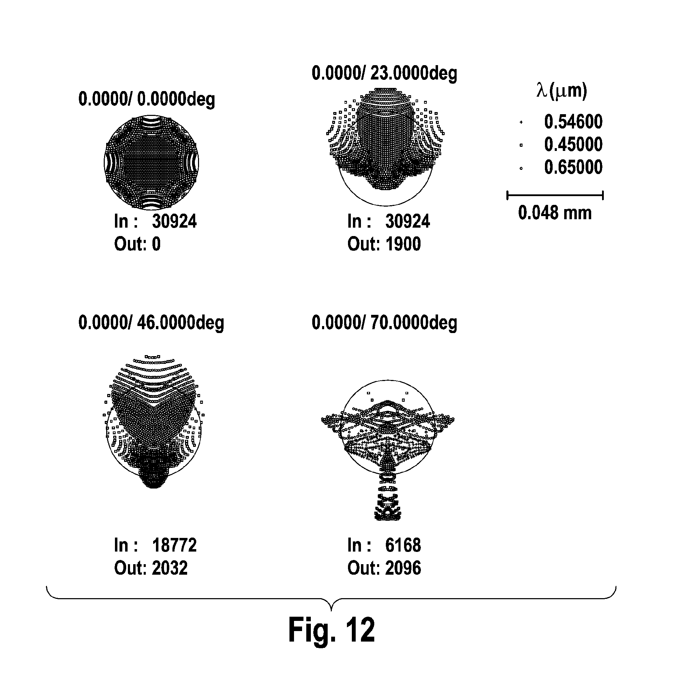

- Fig. 12: ein Spot-Diagramm der Farbrückfahrkamera;

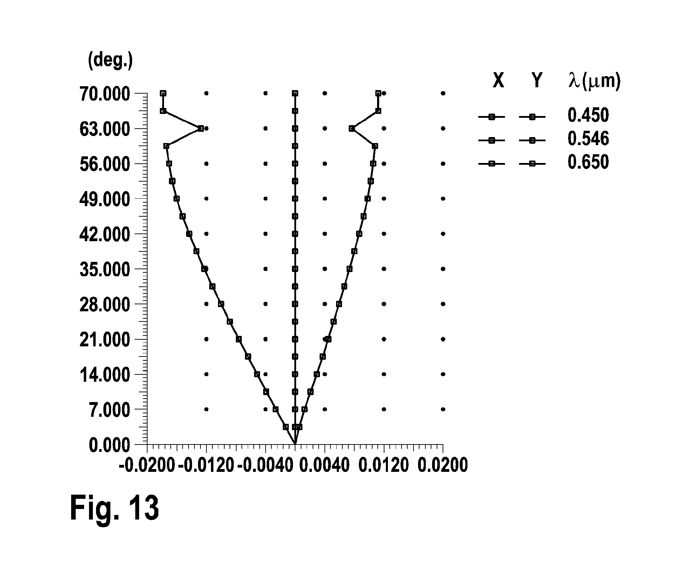

- Fig. 13: ein Diagramm des Farbquerfehlers der Farbrückfahrkamera;

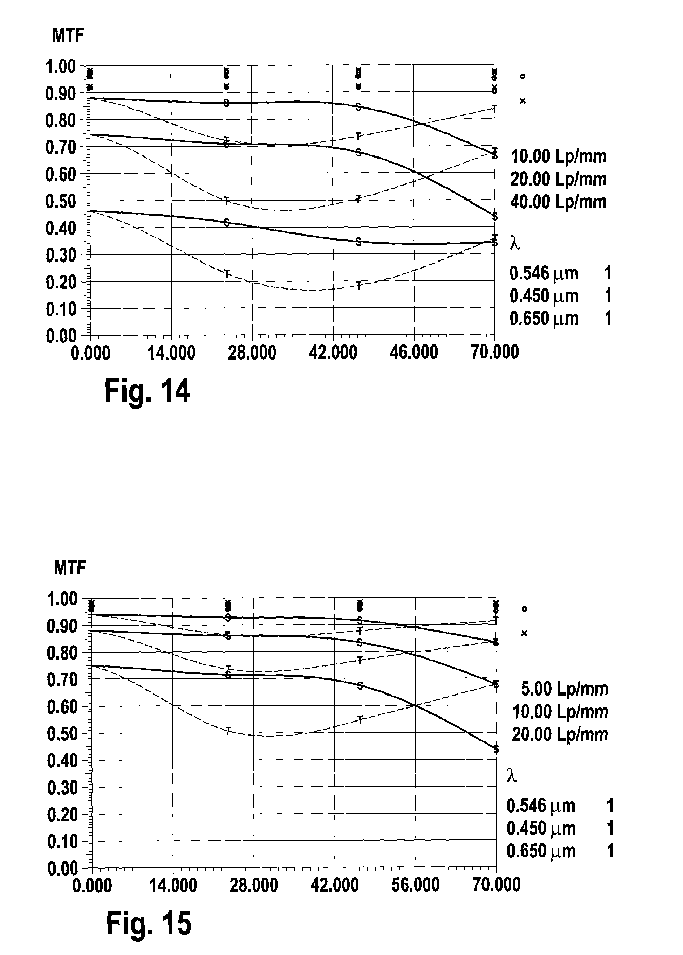

- Fig. 14: die Modulationsübertragungsfunktion (MTF) für unterschiedliche Linienpaare;
- Fig. 15: die Modulationsübertragungsfunktion (MTF) für unterschiedliche Linienpaare bei weiteren Frequenzen;

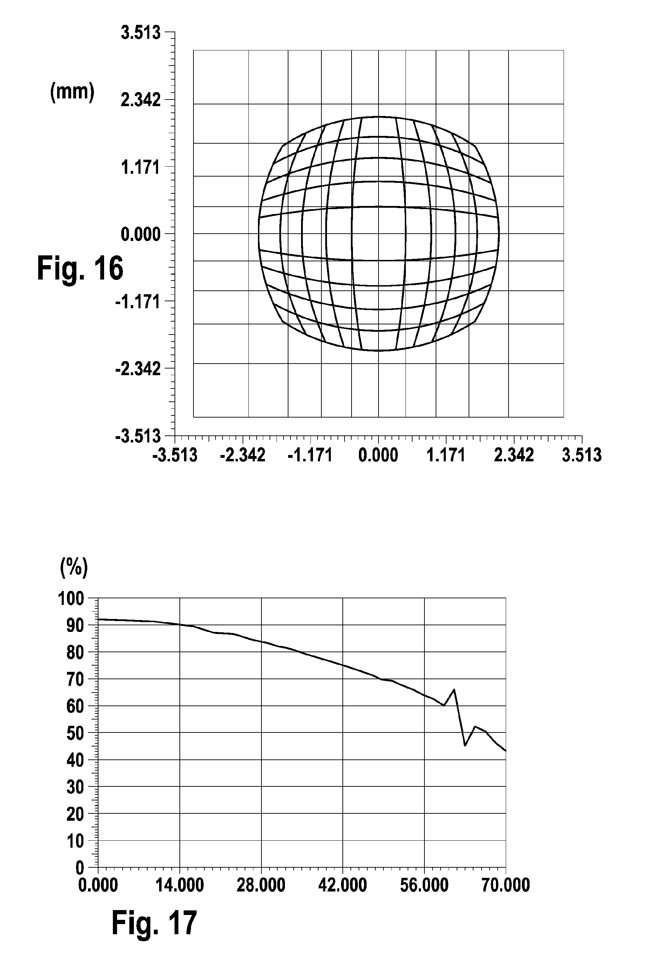

- Fig. 16: die Verzeichnung in der Bildebene;
- Fig. 17: die relative Bestrahlungsstärke in Abhängigkeit des Feldwinkels;

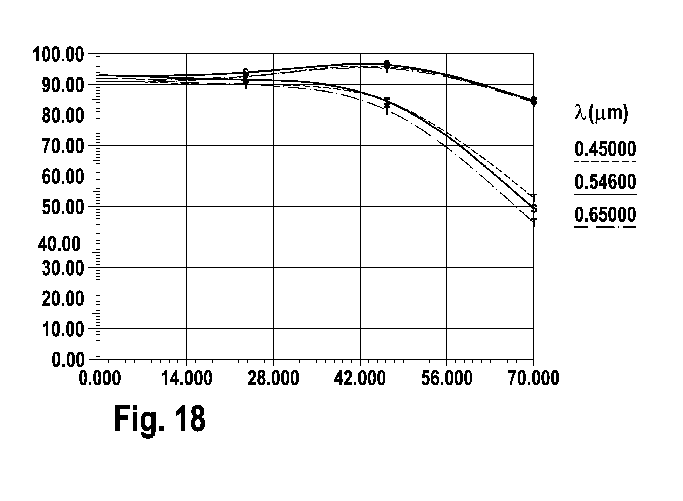

- Fig. 18: die relative Transmission in Abhängigkeit des Feldwinkels;

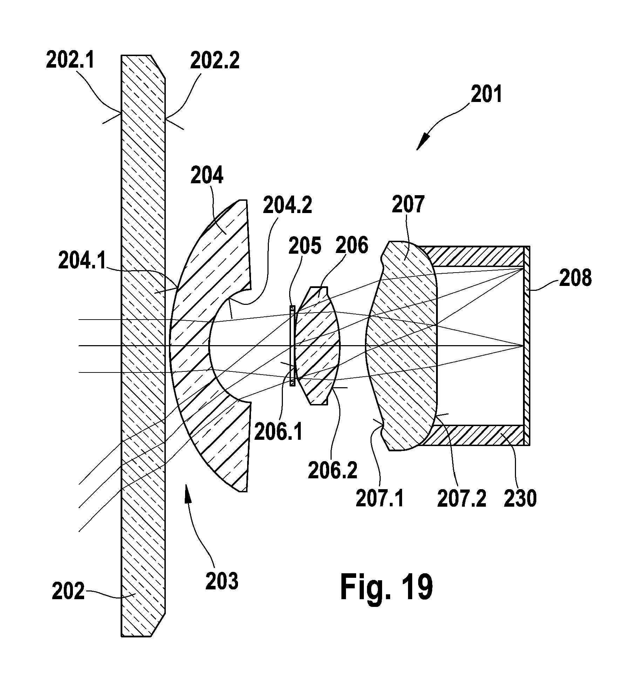

- Fig. 19 bis 26: eine dritte Ausführungsform mit Schutzglas und drei Kunststofflinsen:
- Fig. 19: einen Axialschnitt entlang der Farbrückfahrkamera

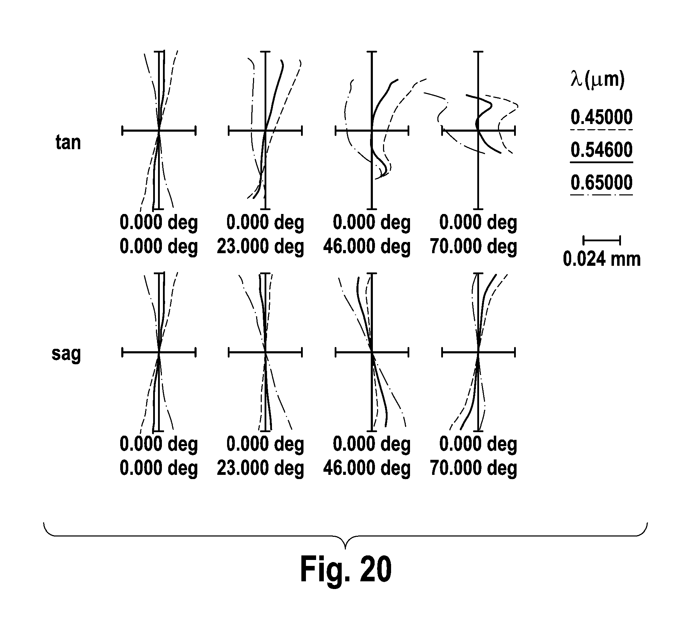

- Fig. 20: eine Darstellung der lateralen Aberrationen der Farbrückfahrkamera;

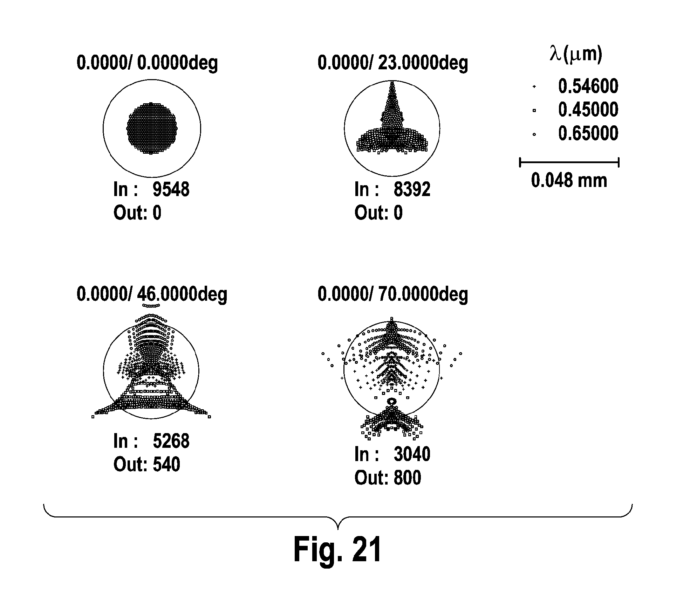

- Fig. 21: ein Spot-Diagramm der optischen Einrichtung;

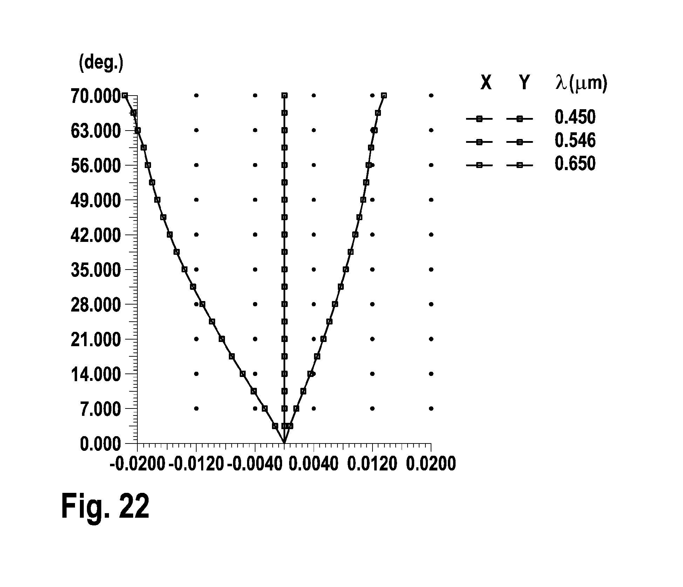

- Fig. 22: ein Diagramm des Farbquerfehlers der optischen Einrichtung aus Fig. 19;

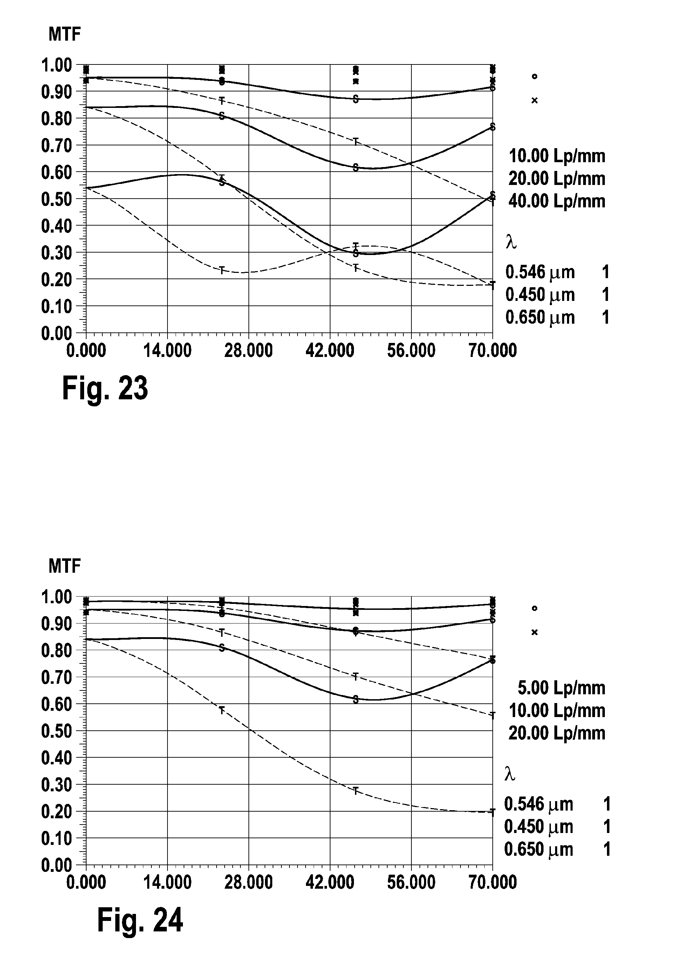

- Fig. 23: die Modulationsübertragungsfunktion (MTF) für unterschiedliche Linienpaare;
- Fig. 24: die Modulationsübertragungsfunktion (MTF) für unterschiedliche Linienpaare bei weiteren Frequenzen;

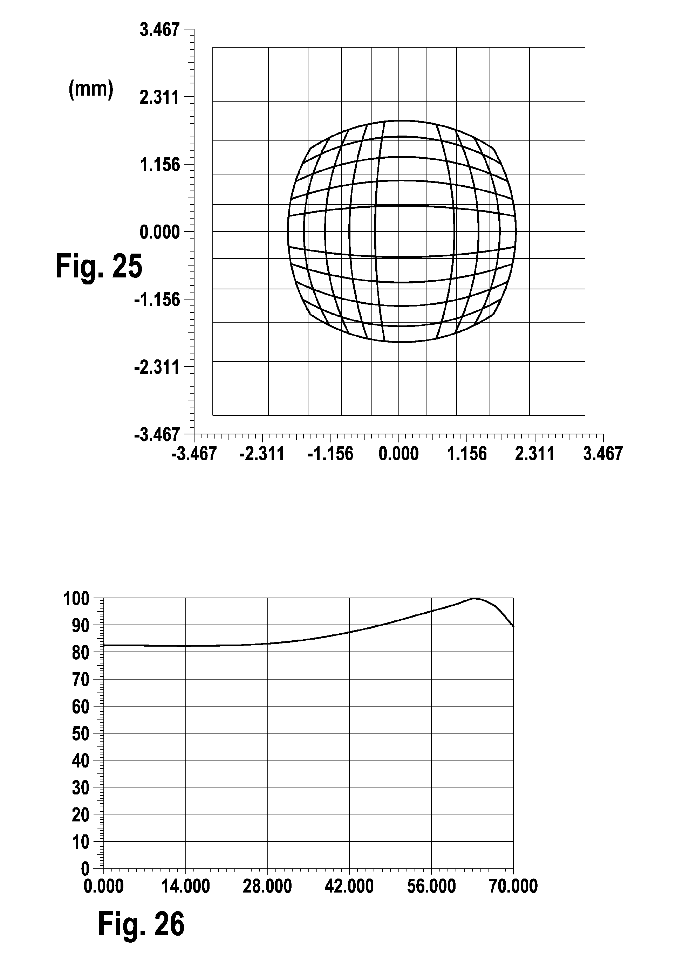

- Fig. 25: die Verzeichnung in der Bildebene;
- Fig. 26: die relative Bestrahlungsstärke in Abhängigkeit des Feldwinkels;

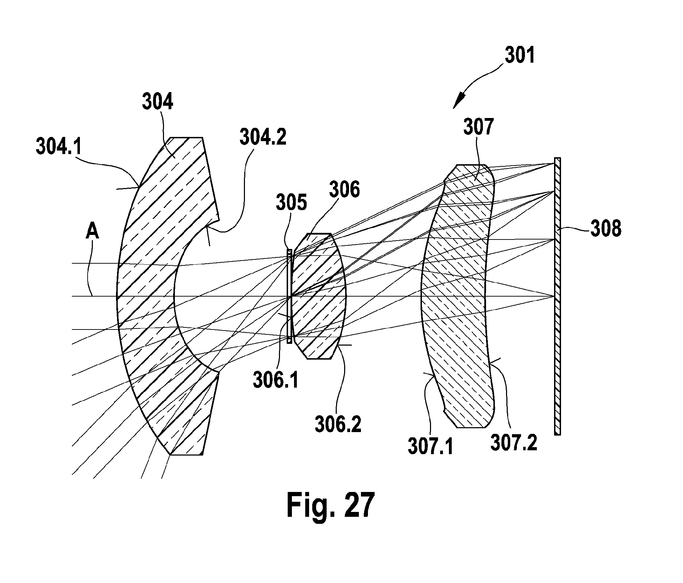

- Fig. 27 bis 34: eine vierte Ausführungsform mit drei Linsen:
- Fig. 27: einen Axialschnitt entlang der optischen Achse

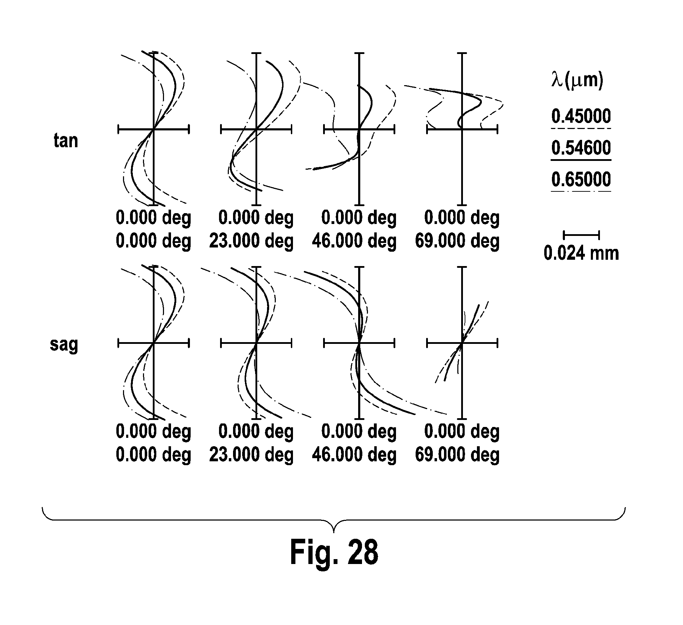

- Fig. 28: eine Darstellung der lateralen Aberrationen der optischen Einrichtung;

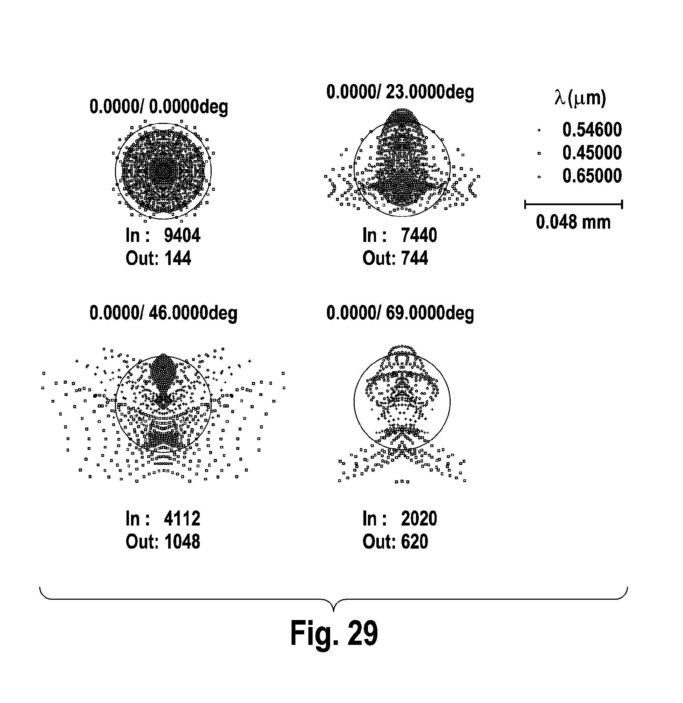

- Fig. 29: ein Spot-Diagramm der optischen Einrichtung;

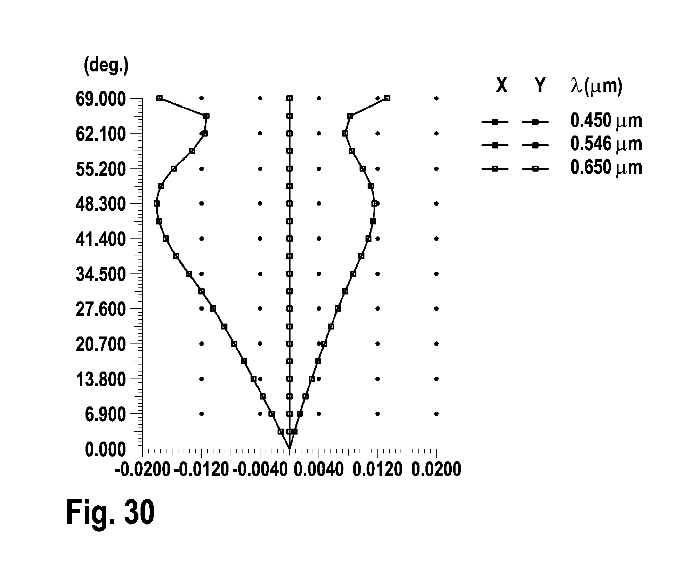

- Fig. 30: ein Diagramm des Farbquerfehlers der optischen Einrichtung aus Fig. 27;

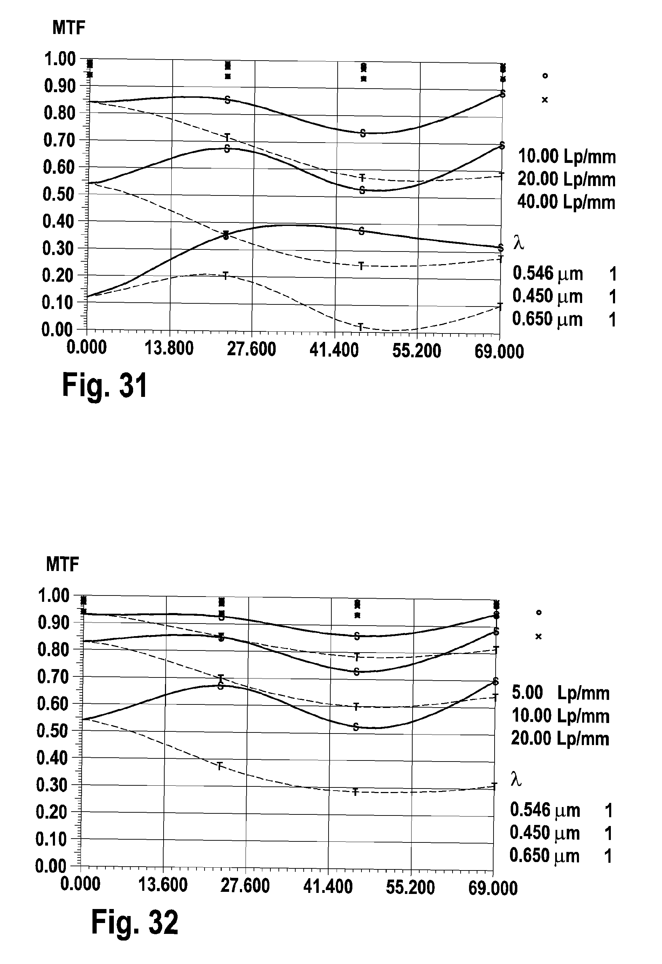

- Fig. 31: die Modulationsübertragungsfunktion (MTF) für unterschiedliche Linienpaare;
- Fig. 32: die Modulationsübertragungsfunktion (MTF) für unterschiedliche Linienpaare bei weiteren Frequenzen;

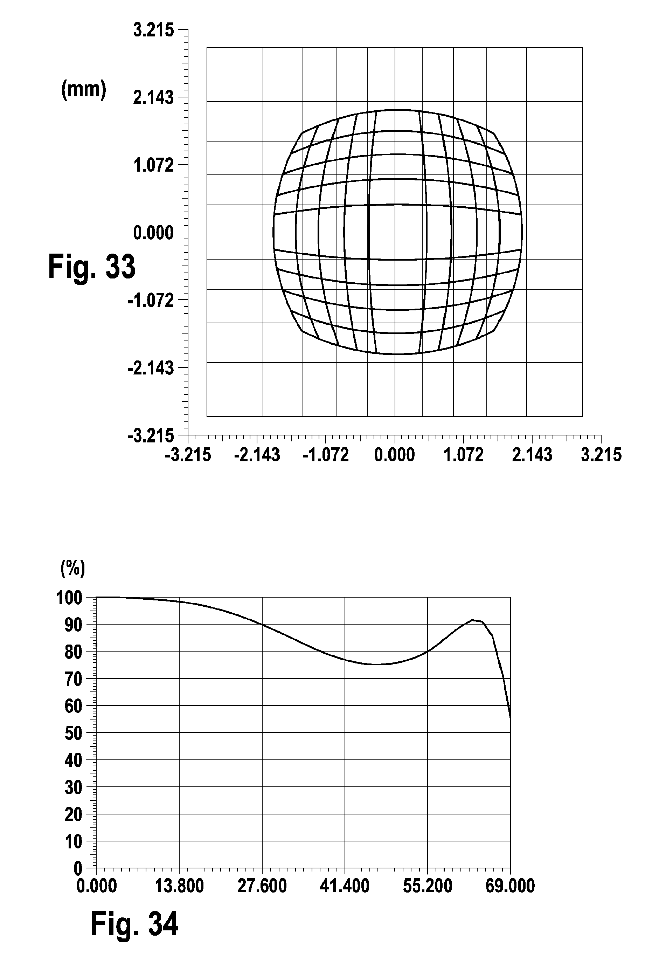

- Fig. 33: die Verzeichnung in der Bildebene;
- Fig. 34: die relative Bestrahlungsstärke in Abhängigkeit des Feldwinkels.

### Ausführungsformen der Erfindung

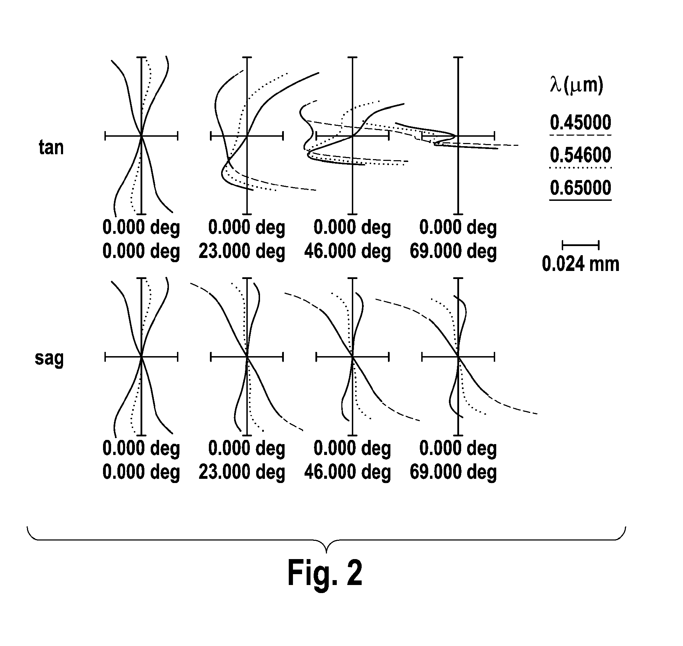

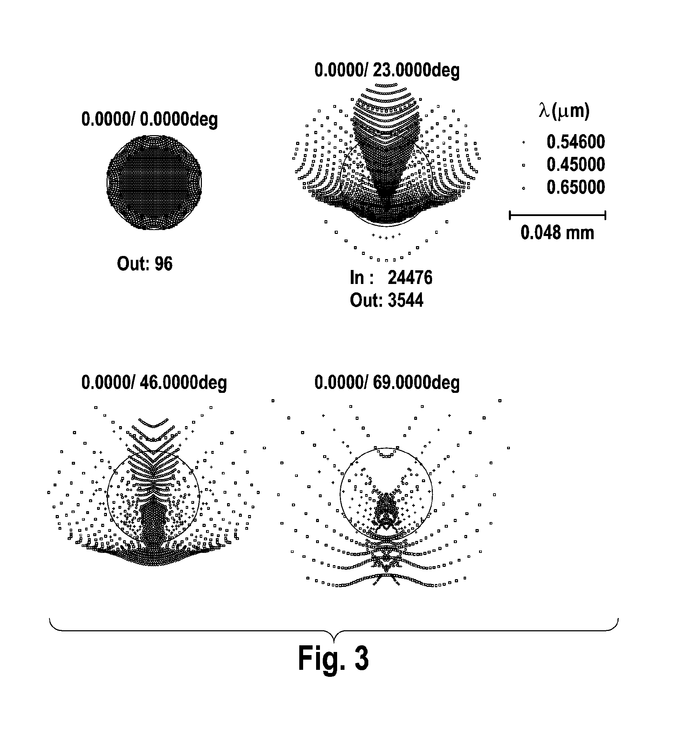

Die Fig. 1 bis 9 zeigen eine erste Ausführungsform einer Farbrückfahrkamera 1, dierotationssymmetrisch um ihre optische Achse A angeordnet - eine biplanare Schutz-Glasplatte 2 aus Mineralglas, über einen biplanaren Luftspalt 3 beabstandet zu dieser eine planar - asphärisch konkave erste Linse 4 aus Kunststoff, eine Blende 5, eine hinter der Blende 5 angeordnete zweite, asphärische, bikonvexe (bzw. asphärisch konvexe - asphärisch konvexe) Linse 6 aus Kunststoff und eine biplanare Glasplatte 7 aufweist.

Auf der Rückseite der Glasplatte 7 ist ein Bildsensor 8, vorzugsweise ein CCD-Chip, spaltfrei befestigt. Die Glasplatte 7 dient als Staubschutz und befindet sich direkt vor dem Bildsensor 8. Zwischen der Glasplatte 7 und dem Bildsensor 8 kann eine den Strahlengang nicht beeinflussende Immersionsflüssigkeit 9 bzw. eine entsprechende, optisch nicht in Erscheinung tretende Kleberschicht 9 vorgesehen sein. Indem somit zwischen der Glasplatte 7 und dem Bildsensor 8 kein Luft-Glasübergang vorgesehen ist und die eventuell vorgesehene Kleberschicht 9 eine der Glasplatte 7 angepasste Brechzahl aufweist, wird ein störender Übergang, der auch eine Quelle für Streulicht und Ghosts darstellen könnte, vermieden. Nach außen wird die Farbrückfahrkamera 1 durch ein in Fig. 1 schematisch eingezeichnetes Gehäuse 10 strahlendicht abgeschirmt.

Die vordere Fläche 2.1 sowie die hintere Fläche 2.2 der Schutz-Glasplatte 2 sind planar (bzw. sphärisch mit unendlichem Radius), weiterhin auch die vordere Fläche 4.1 der ersten Linse 4 und die vordere Fläche 7.1 sowie hintere Fläche 7.2 der Glasplatte 7. Die konkave hintere Fläche 4.2 der ersten Linse 4 sowie die vordere und hintere Fläche 6.1 und 6.2 der zweiten Linse 6 sind asphärisch ausgebildet und weisen Krümmungen auf, die sich als eine Überlagerung einer sphärischen Form mit Polynomen beschreiben lässt, wobei die Indizes der Polynome in der unten stehenden Tabelle 1 aufgeführt sind. Das in Fig. 1 sowie Tabelle 1 gezeigte und beschriebene Design der Linsen 4 und 6 ist hierbei auf die beiden Glasplatten 2 und 7 abgestimmt.

In Fig. 1 sind hierbei unter unterschiedlichem Feldwinkel α1, α2, α3 gegenüber der optischen Achse A auf die Glasplatte 2 einfallende Strahlenbündel eingezeichnet, die jeweils auf den Bildsensor 8 fokussiert werden.

Zur selbstzentrierenden Aufnahme weisen die Elemente konische Flächen auf, zwischen denen entsprechende Abstandshalter vorgesehen sind. Zwischen konischen Anlageflächen 4.3 und 6.3 der Linsen 4 und 6 ist ein durch gestrichelte Linien angedeuteter Abstandshalter 12 vorgesehen, der vorteilhafterweise an der Innenfläche des Gehäuses 10 anliegen kann. Zwischen der Glasplatte 2 und der ersten Linse 4 kann entsprechend ein ringförmiger Abstandshalter 14 vorgesehen sein.

Bei der ersten Ausführungsform werden somit lediglich die Glasplatten 2 und 7, d.h. optische Elemente mit zwei planaren Flächen, aus Mineralglas, z.B. B270-Schutzglas oder N-BK7-Schutzglas, hergestellt. Die Verwendung der äußeren Schutz-Glasplatte 2 aus Mineralglas ermöglicht eine hohe Automotive-Tauglichkeit, insbesondere eine Kratzfestigkeit bzw. Beständigkeit gegen Abrasivelemente, einen Lagertemperaturbereich von -40 bis 120°C und eine Stabilität gegenüber feuchter Wärme. Die komplexer ausgebildeten Linsen 4 und 6 können aus einem blankpressbaren Kunststoff, z.B. Zeonex480R, hergestellt werden. Diese Glasauswahl ermöglicht neben der kostengünstigen Herstellung eine Reduktion des Farbquerfehlers auf das für die Anwendung einer Farbrückfahrkamera erforderliche Maß. Es ergibt sich ein großer Öffnungswinkel von +/- 70° bei einem spektralen Einsatzbereich von 450 bis 650 nm.

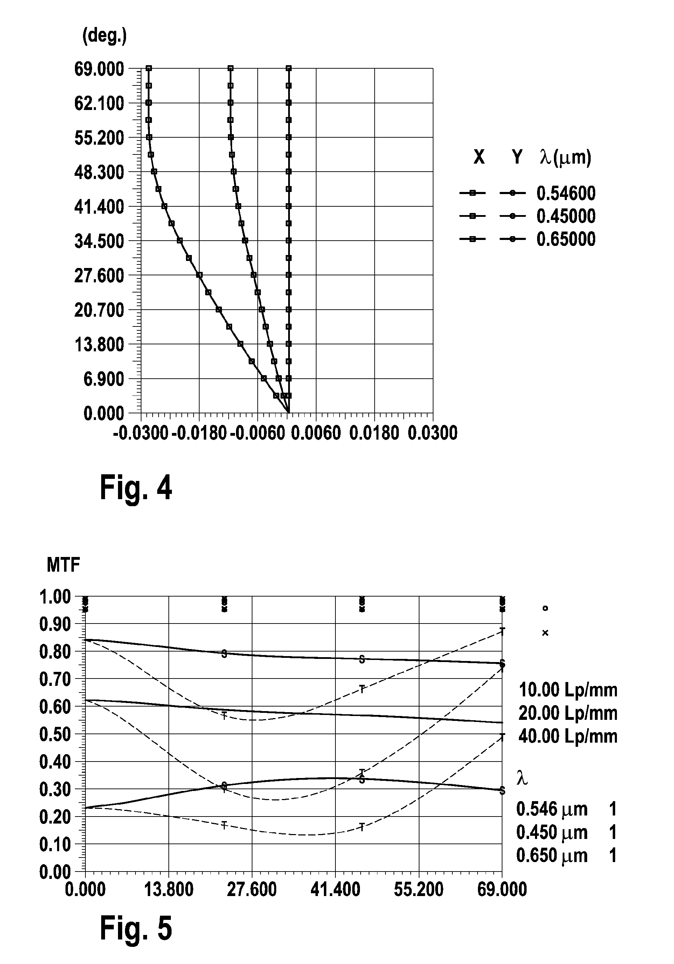

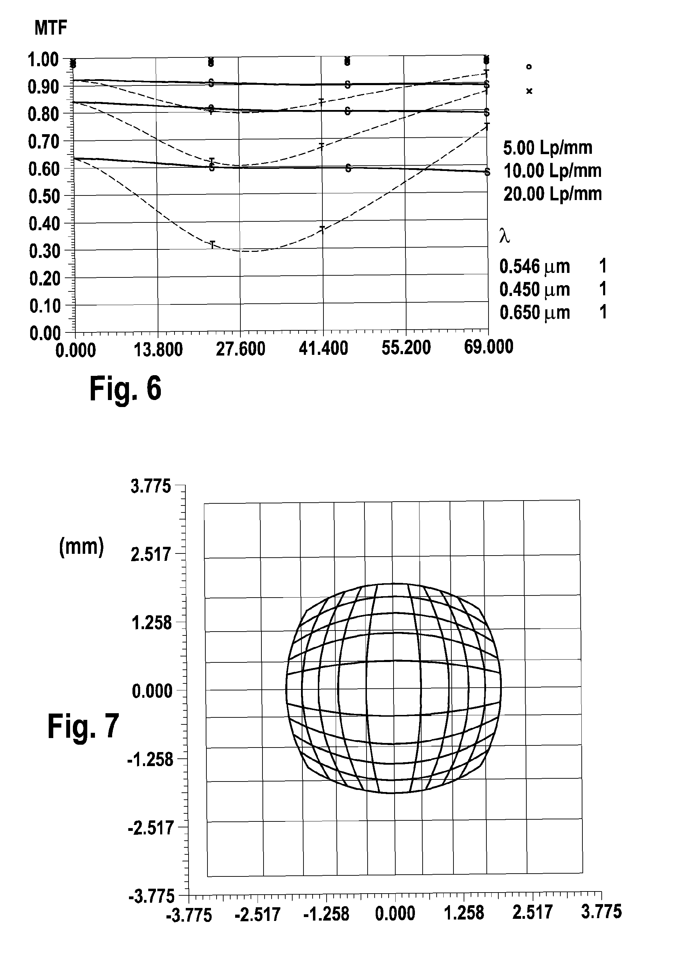

Erfindungsgemäß wird eine Farbkamera mit 6 µm pixel pitch geschaffen, so dass die Nyquist-Frequenz 1/(6µm x 2 x 2) = 41.7 lp/mm (Linienpaare pro Millimeter) beträgt, d.h. das Objektiv muss Ortsfrequenzen bis zur halben Nyquistfrequenz von etwa 20 lp/mm deutlich abbilden (MTF > 50%). Wie auch aus Fig. 5, 6 erkennbar ist, sollte die MTF für höhere Ortsfrequenzen stark abnehmen, so dass auf Grund der "unscharfen Abbildung" die unangenehmen Farbmoire-Effekte unterdrückt werden. Vor diesem Hintergrund ist das vorliegende RVCO (Rückfahrkamera-Objektiv)-Design auf einen kleinen Farbquerfehler optimiert, wobei erfindungsgemäß eine Beschränkung auf drei optische Elemente erreichbar ist.

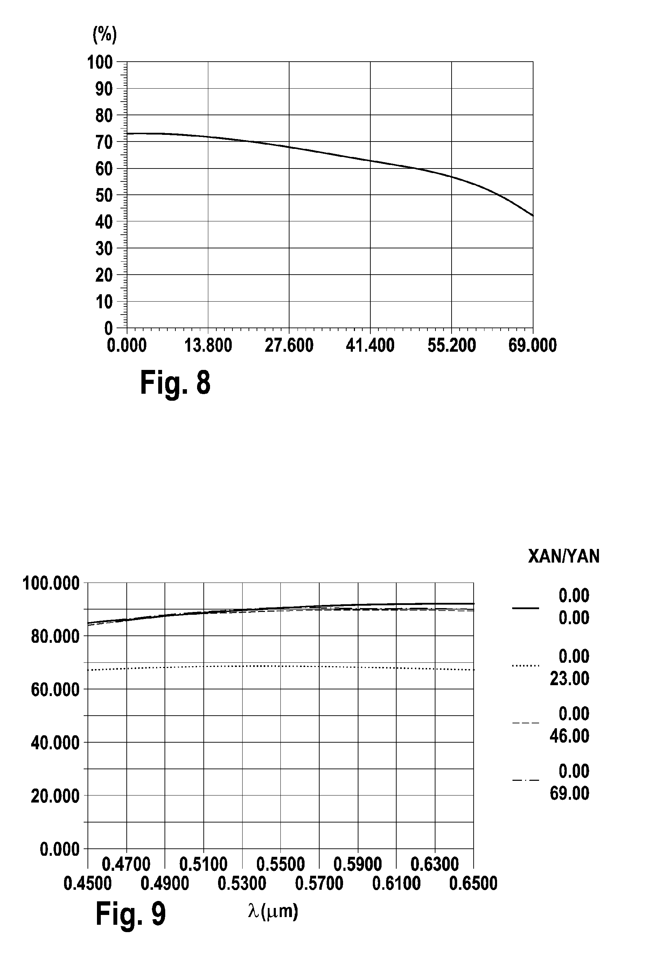

Das RVCO zeigt gemäß Fig. 7 die für Weitwinkelobjekte typische tonnenförmige Verzeichnung. Zusammen mit dem eingangs genannten Bildsensor 8 arbeitet das System als full frame RVC, wobei das Bild in den Ecken nur geringfügig dunkler sein wird, wie aus Fig. 8, 9 erkennbar ist.

**Tabelle 1:**

| **Fläche** | **Radius** | **Abstand** | **Material** | Index | Halber Durchmesser |
|---|---|---|---|---|---|
| Objektiv | Unendlich | Unendlich | | 1.000000 | 0.00 |
| 2.1 | Unendlich | 1.05000 | B270 | 1.520190 | 8.52 |
| 2.2 | Unendlich | 0.08519 | | 1.000000 | 7.67 |
| 4.1 | Unendlich | 2.21481 | ZEONEX | 1.522219 | 6.81 |
| | | | 480R | | |
| 4.2 | 7.0669 | 8.20244 | | 1.000000 | 3.92 |
| 5 | Unendlich | 0.00000 | | 1.000000 | 1.45 |
| 6.1 | 3.6570 | 2.04444 | ZEONEX | 1.522219 | 1.96 |
| | | | 480R | | |
| 6.2 | -4.1694 | 3.85874 | | 1.000000 | 2.30 |
| 7.1 | Unendlich | 0.5000 | B270 | 1.520190 | 2.73 |
| 7.2 | Unendlich | | | 1.000000 | 2.39 |

Die Tabellen geben jeweils einige Daten einer möglichen Ausbildung der betreffenden Ausführungsformen wieder, wobei die Angaben des Radius, Abstandes und halben Durchmessers in mm erfolgen. Die erste Zeile gibt die Eigenschaften des gesamten Objektivs an, die nachfolgenden Zeilen beziehen sich auf die jeweils in der ersten Spalte angegebenen Flächen. Der Typ wird mit S für sphärisch und A für asphärisch bezeichnet. Plane Ebenen sind als sphärisch mit unendlichem Radius aufgeführt. Der Abstand ist auf die jeweils nächste (d.h. in der nachfolgenden Zeile aufgeführte) Ebene bezogen. wobei die Krümmungsradien der Linsenflächen in Abhängigkeit der Brechungsindizes der Materialen ausgewählt werden können. Der halbe Durchmesser bzw. die halbe Höhe senkrecht zur optischen Achse entspricht bei symmetrischer Ausbildung dem Radius.

Die Figuren 10 bis 18 zeigen eine zweite Ausführungsform einer Farbrückfahrkamera 101 mit einer Schutzglasplatte 102, einer ersten Linse 104, einer Blende 105, einer zweiten Linse 106, einer Faserplatte 107 und einem Bildsensor 108. Bei dieser Ausführungsform ist die Schutzglasplatte 102 aus Mineralglas wiederum biplanar, d. h. die Flächen 102.1, 102.2 sind planar, die Linsenflächen 104.1, 104.2, 106.1, 106.2 sind jedoch asphärisch ausgebildet. Hierbei sind die Linsenflächen 104.1, 106.1, 106.2 konvex und die hintere Fläche 104.2 der ersten Linse 104 konkav. Somit ist der Luftspalt 103 planar - asphärisch konkav. Die Bildebene des Strahlenganges liegt auf der sphärischen, konkaven Vorderseite 107.1 der Faserplatte 107, wobei der Bildsensor 108 auf der planaren Rückseite 107.2 der Faserplatte 107 befestigt, z.B. mittels einer optisch nicht relevanten Kleberschicht festgeklebt ist.

Die Tabelle 2 gibt beispielhafte Parameter zu der zweiten Ausführungsform, wobei wiederum planare Ebenen als sphärisch mit unendlichem Radius wieder gegeben sind.

**Tabelle 2**

| **Fläche** | **Radius** | **Abstand** | **Material** | Index | Halber Durchmesser |
|---|---|---|---|---|---|
| Objektiv | Unendlich | Unendlich | | 1.000000 | 0.00 |
| 102.1 | Unendlich | 1.00000 | N-BK7 | 1.518726 | 4.05 |
| 102.2 | Unendlich | 0.10459 | | 1.000000 | 3.26 |
| 104.1 | 18.9644 | 0.93149 | ZEONEX | 1.526925 | 2.63 |
| | | | 480R | | |
| 104.2 | 1.8647 | 2.19313 | | 1.000000 | 1.30 |
| 105 | Unendlich | 0.0000 | | 1.000000 | 0.80 |
| 106.1 | 4.4254 | 1.04967 | ZEONEX | 1.526925 | 0.89 |
| | | | 480R | | |
| 106.2 | -1.8980 | 4.31286 | | 1.000000 | 1.14 |
| 107.1 | 20.0536 | | | 1.000000 | 2.51 |

Die Figuren 19 bis 25 sowie die Tabelle 3 zeigen eine dritte Ausführungsform einer Farbrückfahrkamera 201, die mit entsprechender Bezeichnung wiederum eine Schutzglasplatte 202, durch einen Luftspalt 203 getrennt eine erste Kunststofflinse 204 sowie hinter einer Blende 205 eine zweite Kunststofflinse 206 zeigt; weiterhin ist eine dritte Kunststofflinse 207 vorgesehen, die in axialer Richtung vor dem Bildsensor 8 beabstandet vorgesehen ist. Die Linsen 204, 206 und 207 weisen hierbei asphärische Flächen 204.1, 204.2, 206.1, 206.2, 207.1, 207.2 mit zum Teil komplexerer Formgebung auf. Diese komplexeren Formen können jedoch in kostengünstigen Kunststoffasphären verwirklicht werden, wobei lediglich die Schutzglasplatte 202 aus Mineralglas herzustellen ist. Der Bildsensor 208 ist hierbei nicht - wie bei den anderen Ausführungsformen - direkt an einer Linse bzw. Glas- oder Faserplatte befestigt. Dennoch können auch bei dieser Ausführungsform störende Farbmoire-Effekt, die durch Ghosts oder Farbquerfehler verursacht werden, vermieden werden, indem die dritte Linse 207 eine geeignete, komplexere Formgebung zur Korrektur von Bildfehlern aufweist. Auch bei dieser Ausführungsform ergibt sich ein großer Öffnungswinkel von +/- 70° bei einem spektralen Einsatzbereich von 450 bis 650 nm.

Bei diesem Design wird bewusst auf den Einsatz eines weiteren Schutzglases vor dem Bildsensor 208 verwendet. Als Staubschutz kann statt dessen die dritte asphärische Linse 207 mit Hilfe eines Distanzringes 230 aufgeklebt werden.

Bei entsprechender Ausgestaltung des Asphärenrandes ist eine selbstzentrierende Wandauflage realisierbar. Bei gleicher Vorgabe von 6 µm pixel pitch ergibt sich wiederum eine Nyquist-Frequenz von 41.7 lp/mm, so dass das Objektiv wiederum Ortsfrequenzen bis zur halben Nyquist-Frequenz von etwa 20 lp/mm deutlich abzubilden hat. Für höhere Ortsfrequenzen sollte die MTF gemäß Fig. 23, 24 stark abnehmen, so dass aufgrund der "unscharfen Abbildung" die unangenehmen Farmoire-Effekte unterdrückt werden können. Daher wird erfindungsgemäß das vorliegende RVCO-Desin auf einen kleinen Farbquerfehler optimiert, wie auch aus den Figuren 22, 20 und 21 ersichtlich ist. Auch hier zeigt gemäß Fig. 26 das dargestellte Objektiv bzw. RCVO die für Weitwinkelobjektive typische tonnenförmige Verzeichnung.

Insbesondere die Asphären 206.2 und 207.2 weisen eine komplexere Formgebung mit konkaven und konvexen Bereichen auf, wobei ein mittlerer Bereich der Asphäre 206.2 konvex und ein äußerer Bereich konkav, und bei der Asphäre 207.1 entsprechend ein mittlerer Bereich konvex und der anschließende äußere Bereich konkav sein können. Bei der hinteren Asphäre 207.2 der dritten Linse 207 ist hingegen der mittlere Bereich plan oder auch konkav und der sich anschließende ringförmige äußere Bereich konvex. Die Angaben zu den Linsenflächen sind in Tabelle 3 zusammengestellt.

| **Fläche** | **Radius** | **Abstand** | **Material** | Index | Halber Durchmesser |
|---|---|---|---|---|---|
| Objektiv | Unendlich | Unendlich | | 1.000000 | 0.00 |
| 202.1 | Unendlich | 1.04594 | N-BK7 | 1.518726 | 7.00 |
| 202.2 | Unendlich | 0.10459 | | 1.000000 | 6.50 |
| 204.1 | 4.8706 | 0.95039 | ZEONEX | 1.526925 | 4.00 |
| | | | 480R | | |
| 204.2 | 1.8316 | 2.04919 | | 1.000000 | 1.32 |
| 205 | Unendlich | 0.0000 | | 1.000000 | 0.80 |
| 206.1 | 5.7867 | 1.03257 | ZEONEX | 1.526925 | 1.00 |
| | | | 480R | | |
| 206.2 | -3.9351 | 0.64194 | | 1.000000 | 1.40 |
| 207.1 | 2.3829 | 1.65485 | ZEONEX | 1.526925 | 2.10 |
| | | | 480R | | |
| 207.2 | 16.3417 | 2.09188 | | 1.000000 | 2.50 |
| 208 | Unendlich | | | 1.000000 | 2.40 |

### Tabelle 3

Bei der Farbrückfahrkamera 301 der vierten Ausführungsform der Figuren 27 bis 34 ist keine Schutzglasplatte vorgesehen. Als vordere Abdeckung ist direkt eine erste Linse 304 vorgesehen, weiterhin wiederum axial beabstandet hinter der Blende 305 eine zweite bikonvexe Linse 306 und eine dritte Linse 307, die axial beabstandet vor dem Bildsensor 308 bzw. dessen Sensorfläche vorgesehen ist. Die dritte Linse 307 dient entsprechend der dritten Linse 207 der dritten Ausführungsform zur Korrektur von Bildfehlern, so dass an der Sensorfläche des Bildsensors 308 keine Glasplatte oder weitere optische Einrichtung vorzusehen ist.

Hierbei kann die mittlere, zweite Linse 306 mit zwei sphärischen Flächen 306.1, 306.2 ausgebildet und somit kostengünstig hergestellt werden. Bei dieser Ausführungsform sind vorteilhafterweise sämtliche Linsen 304, 306, 307 aus Mineralglas hergestellt. Es wird wiederum ein großer Öffnungswinkel von +/- 70° bei einem spektralen Einsatzbereich von 450 bis 650 nm erreicht.

**Tabelle 4**

| **Fläche** | **Radius** | **Abstand** | **Mate-rial** | Index | Halber Durchmesser |
|---|---|---|---|---|---|
| Objektiv | Unendlich | Unendlich | | 1.000000 | 0.00 |
| 302.1 | 4.0483 | 1.00001 | B270 | 1.525095 | 2.78 |
| 302.2 | 1.8292 | 2.03193 | | 1.000000 | 1.33 |
| 304.1 | Unendlich | 0.00000 | | 1.000000 | 0.70 |
| 304.2 | 6.8236 | 0.95669 | F2 | 1.624088 | 0.78 |
| 305 | -2.3426 | 1.32656 | | 1.000000 | 1.09 |
| 306.1 | 4.3005 | 1.09977 | B270 | 1.525095 | 2.03 |
| 306.2 | 14.4939 | 1.21756 | | 1.000000 | 2.30 |
| 307.1 | Unendlich | | | 1.000000 | 2.36 |

## Patentansprüche

1. Rückfahrkamera für ein Fahrzeug, die aufweist:
eine erste Linse (4, 104, 204, 304) mit einer vorderen Linsenfläche (4.1, 104.1, 204.1, 304.1) und einer konkaven hinteren Linsenfläche (4.2, 104.2, 204.2, 304.2),
eine im Strahlengang hinter der ersten Linse (4, 104, 204, 304) angeordnete, bikonvexe zweite Linse (6, 106, 206, 306),
einen Bildsensor (8, 108, 208, 308) zur winkelaufgelösten Detektion des einfallenden Lichtes und Ausgabe eines Bildsignals,
ein vor dem Bildsensor (8, 108, 208, 308) angeordnetes und mit diesem verbundenes drittes optisches Element (7, 107, 207, 307), und
ein die Linsen (4, 104, 204, 304, (6, 106, 206, 306), den Bildsensor (8, 108, 208, 308) und das dritte optische Element (7, 107, 207, 307) aufnehmendes Gehäuse (10),
wobei mindestens die hintere Linsenfläche (4.2, 104.2, 204.2, 304.2) der ersten Linse (4, 104, 204, 304) asphärisch konkav ausgebildet ist.

2. Rückfahrkamera nach Anspruch 1, **dadurch gekennzeichnet, dass** die vordere Linsenfläche (4.1, 104.1, 204.1, 304.1) der ersten Linse (4, 104, 204, 304) konvex oder planar ausgebildet ist.

3. Rückfahrkamera nach Anspruch 2, **dadurch gekennzeichnet, dass** die vordere Linsenfläche (104.1, 204.1, 304.1) der ersten Linse (104, 204, 304) asphärisch konvex ausgebildet ist.

4. Rückfahrkamera nach Anspruch 2, **dadurch gekennzeichnet, dass** die vordere Linsenfläche (4.1) der ersten Linse (4) plan ausgebildet ist.

5. Rückfahrkamera nach einem der vorherigen Ansprüche, **dadurch gekennzeichnet, dass** sie als vorderen Abschluss eine Schutzglasscheibe (2, 102, 202) aus einem Mineralglas aufweist.

6. Rückfahrkamera nach Anspruch 5, **dadurch gekennzeichnet, dass** die Schutzglasscheibe (2, 102, 202) biplanar ausgebildet ist.

7. Rückfahrkamera nach Anspruch 5 oder 6, **dadurch gekennzeichnet, dass** die erste Linse (4, 104, 204) und/oder die zweite Linse (6, 106, 206) aus einem Kunststoffmaterial hergestellt sind.

8. Rückfahrkamera nach Anspruch 7, **dadurch gekennzeichnet, dass** das Kunststoffmaterial ein blank pressbarer Kunststoff, z.B. Zeonex 480 R, ist.

9. Rückfahrkamera nach einem der Ansprüche 1 bis 5, **dadurch gekennzeichnet, dass** die vordere Linse (304) den vorderen Abschluss der Rückfahrkamera (301) bildet und aus einem Mineralglas hergestellt ist.

10. Rückfahrkamera nach einem der vorherigen Ansprüche, **dadurch gekennzeichnet, dass** die zweite Linse (6, 106, 206) zwei asphärische konvexe Linsenflächen (6.1, 6.2, 106.1, 106.2, 206.1, 206.2) aufweist.

11. Rückfahrkamera nach einem der vorherigen Ansprüche, **dadurch gekennzeichnet, dass** die dritte optische Einrichtung eine biplanare Platte, z.B. Glasplatte (7), ist, an deren hinterer Fläche (7.2) der Bildsensor (8) befestigt ist.

12. Rückfahrkamera nach einem der Ansprüche 1 bis 10, **dadurch gekennzeichnet, dass** die dritte optische Einrichtung (107) eine Faserplatte ist, auf deren hinterer Fläche (107.2) der Bildsensor (108) befestigt ist und deren vordere Fläche (107.1) als sphärische Bildebene ausgebildet ist.

13. Rückfahrkamera nach Anspruch 10 oder 12, **dadurch gekennzeichnet, dass** der Bildsensor (8, 108) auf die hintere Fläche (7.2, 107.2) der Glasplatte (7) oder Faserplatte (107) mittels eines die gleiche Brechzahl wie die Glasplatte oder Faserplatte aufweisenden Klebmittels oder Immersionsmittels befestigt ist.

14. Rückfahrkamera nach einem der Ansprüche 1 bis 10, **dadurch gekennzeichnet, dass** die dritte optische Einrichtung eine dritte Linse (207, 307) ist, die zwei asphärische Linsenflächen (207.1, 207.2, 307.1, 307.2) aufweist, wobei der Bildsensor (208, 308) axial beabstandet hinter der dritten Linse (207, 307) und mit dieser dichtend verbunden vorgesehen ist.

15. Rückfahrkamera nach Anspruch 14, **dadurch gekennzeichnet, dass** der Bildsensor (208, 308) mittels eines abdichtenden Distanzringes (230) an die dritte Linse (207, 307) geklebt ist.

16. Rückfahrkamera nach Anspruch 14 oder 15, **dadurch gekennzeichnet, dass** die dritte Linse (207, 307) eine asphärische vordere Linsenfläche (207.1, 307.1) mit einem mittleren konvexen Bereich und einem äußeren konkaven Bereich und eine asphärische hintere Linsenfläche (207.2, 307.2) mit einem mittleren konvexen oder planaren Bereich und einem äußeren konvexen Bereich aufweist.

17. Rückfahrkamera nach einem der vorherigen Ansprüche, **dadurch gekennzeichnet, dass** vor der zweiten Linse (6, 106, 206, 306) eine Blende (5, 105, 205, 305) vorgesehen ist.

18. Rückfahrkamera nach einem der vorherigen Ansprüche, **dadurch gekennzeichnet, dass** sie als optische Elemente genau die erste Linse (4, 104, 204, 304), die zweite Linse 6, 106, 206, 306), die dritte optische Einrichtung (7, 107, 207, 307) und gegebenenfalls eine die vordere Abdeckung der optischen Einrichtung darstellende Schutzglasplatte (2, 102, 202, 302) aufweist und frei von weiteren Linsen ist.

19. Rückfahrkamera nach einem der vorherigen Ansprüche, **dadurch gekennzeichnet, dass** die Modulationsübertragungsfunktion (MTF) auf dem Bildsensor (8, 108, 208, 308) für höhere Ortsfrequenzen als etwa die halbe Nyquist-Frequenz weniger als 0,5 beträgt.

20. Rückfahrkamera nach einem der vorherigen Ansprüche, **dadurch gekennzeichnet, dass** sie als Farbrückfahrkamera (1, 101, 201, 301) ausgebildet ist und der Bildsensor (8) ein Farbsensor zur spektralen Detektion des einfallenden Lichtes ist.

21. Rückfahrkamera nach Anspruch 19 und Anspruch 20, **dadurch gekennzeichnet, dass** sie als Farbkamera mit einem pixel pitch kleiner oder gleich 6 µm und einer Nyquist-Frequenz größer 40 lp/mm ausgebildet ist.

22. Rückfahrkamera nach Anspruch 20 oder 21, **dadurch gekennzeichnet, dass** Farbmoire-Effekte durch die unscharfe Abbildung aufgrund der geringen Modulationsübertragungsfunktion weitgehend unterdrückt sind.

23. Rückfahrkamera nach einem der vorherigen Ansprüche, **dadurch gekennzeichnet, dass** sie ein Öffnungswinkel von mindestens +/- 65°, insbesondere +/-70° aufweist.
